# FASCICULE DE BREVET EUROPEEN

(11) **EP 1 646 797 B1**
(45) Date de publication et mention de la délivrance du brevet: **11.08.2010**
(21) Numéro de dépôt: 04767915.4
(22) Date de dépôt: 23.07.2004
(51) Int. Cl.: F16D 13/58

(54) **PROCEDE D'EQUILIBRAGE D'UN MECANISME D'EMBRAYAGE ET COUVERCLE POUR UN TEL MECANISME**
VERFAHREN ZUM AUSGLEICH EINES KUPPLUNGSMECHANISMUS UND ABDECKUNG DAFÜR
METHOD FOR BALANCING A CLUTCH MECHANISM AND A COVER THEREFOR

(30) Priorité: 23.07.2003 FR 0309021
(43) Date de publication de la demande: 19.04.2006
(73) Titulaire: Valeo Embrayages, 80009 Amiens (FR)
(72) Inventeur: MAINGAUD, Daniel, F-80250 Rouvrel (FR)
(74) Mandataire: Lemaire, Marc
(86) Numéro de dépôt international: PCT/FR2004/050354
(87) Numéro de publication internationale: WO 2005/010390

(56) Documents cités:
- DE-A- 2 539 491
- DE-A- 4 107 950
- DE-A- 10 005 838
- DE-A1- 3 430 325
- FR-A- 2 629 594

## Description

La présente invention concerne un procédé d'équilibrage d'un mécanisme d'embrayage.

Un mécanisme d'embrayage classique, comportant un couvercle, est positionné sur un volant moteur à l'aide de tétons de positionnement portés par le volant coopérant avec des orifices de positionnement ménagés dans le couvercle. Les orifices de positionnement sont généralement disposés selon des références géométriques, de façon à ce que le l'axe de rotation du mécanisme d'embrayage passe par le centre géométrique de ce mécanisme d'embrayage, à savoir le centre du contour interne ou externe d'un des éléments du mécanisme, notamment le couvercle.

Il est alors habituel que le mécanisme ait un balourd, c'est à dire que le centre de gravité du mécanisme ne se trouve pas sur son axe de rotation.

Ce balourd induit une force d'inertie lorsque le mécanisme tourne, créant ainsi des vibrations pouvant nuire au bon fonctionnement de l'embrayage. Il est donc nécessaire de réduire le plus possible ce balourd, en ramenant le centre de gravité du mécanisme sur son axe de rotation, par un procédé dit d'équilibrage.

On connaît déjà dans l'état de la technique un procédé d'équilibrage d'un mécanisme d'embrayage comportant un couvercle destiné à être positionné sur un volant moteur au moyen d'orifices de positionnement ménagés sur le couvercle coopérant avec des tétons de positionnement portés par le volant, ce procédé étant du type dans lequel :
- on fait tourner le mécanisme autour d'un axe de référence,
- on détermine le balourd autour de cet axe de référence.

Selon un procédé d'équilibrage de l'état de la technique, on détermine le balourd au moyen d'un dispositif d'équilibrage tournant autour d'un axe de rotation, sur lequel on positionne le mécanisme de la même manière qu'on le positionne sur le volant moteur, c'est à dire c'est à dire à l'aide de tétons de positionnement portés par le dispositif d'équilibrage, coopérant avec des orifices de positionnement préalablement ménagés sur le couvercle du mécanisme.

Une fois que ce balourd est déterminé, l'équilibrage consiste à compenser par ajout ou retrait de matière ce balourd, ramenant ainsi le centre de gravité du mécanisme sur l'axe de rotation.

Le procédé le plus utilisé consiste à ajouter des masselottes dans la direction opposée à celle du balourd, compensant ainsi les effets d'inertie dus au balourd.

Ce procédé, bien que couramment utilisé, possède néanmoins des inconvénients, notamment dus au fait que les masselottes ne peuvent être ménagées qu'à certains endroits prévus à cet effet sur le couvercle. Il n'est donc pas toujours possible de compenser efficacement le balourd.

De plus, l'ajout de masselottes augmente généralement l'encombrement du couvercle du mécanisme et notamment le volume tournant de ce mécanisme.

Un autre procédé d'équilibrage, décrit par le brevet FR 2 629 594 propose un équilibrage par retrait de matière.

Il s'agit d'équilibrer le mécanisme en retirant du couvercle une masse de matière suivant une direction et sur un rayon prédéfinis, de manière à réduire le balourd.

En pratique, ce procédé est peu utilisé, puisque le retrait de matière fragilise le couvercle, et conduit à la formation de copeaux qui peuvent s'introduire dans le mécanisme et ainsi nuire à son bon fonctionnement. De plus, le couvercle doit comporter suffisamment de matière à retirer pour compenser le balourd, ce qui n'est pas forcément le cas.

L'invention a pour but de remédier à tous ces inconvénients en fournissant un procédé d'équilibrage d'un mécanisme d'embrayage capable de réduire le balourd sans ajout ni retrait de masse de matière.

A cet effet, l'invention a pour objet un procédé d'équilibrage d'un mécanisme d'embrayage comportant un couvercle destiné à être positionné sur un support au moyen de formes de positionnement ménagés sur le couvercle coopérant avec des formes complémentaires de positionnement portés par le support, ce procédé étant du type dans lequel :
- on fait tourner le mécanisme autour d'un axe de référence,
- on détermine le balourd autour de cet axe de référence,
caractérisé en ce que, après détermination du balourd, on réalise, dans le couvercle, une modification des positions des formes de positionnement de ce couvercle sur le support, en fonction de la mesure du balourd.

Ainsi, le mécanisme est positionné sur le volant moteur de façon à ce que l'axe de rotation passe par le centre de gravité du mécanisme, ceci conformément à une précision exigée.

Le balourd est donc ainsi réduit, sans ajout de masselottes ni retrait de matière.

Un procédé d'équilibrage de mécanisme d'embrayage selon l'invention peut en outre comporter l'une ou plusieurs des caractéristiques suivantes :
- pour faire tourner le mécanisme autour de l'axe de référence, on fixe ce mécanisme sur un dispositif d'équilibrage ;
- on fixe le mécanisme sur le dispositif d'équilibrage par accrochage d'un plateau de pression du mécanisme sur un mandrin de ce dispositif ;
- la forme complémentaire de positionnement est un téton.
- au moins un orifice de positionnement est de forme oblongue ;
- des orifices de fixation du couvercle sur le volant moteur sont ménagés sur le couvercle après détermination du balourd ;
- au moins un orifice de fixation est de forme oblongue ;
- au moins un orifice de positionnement ou un orifice de fixation est réalisé par usinage ;
- au moins un orifice de positionnement ou un orifice de fixation est réalisé par découpe laser ;
- après réalisation des orifices, on effectue une réduction du balourd résiduel ;
- la réduction du balourd résiduel se fait par enlèvement de matière du couvercle ;
- l'enlèvement de matière est réalisé par découpe laser ;
- la réduction du balourd résiduel se fait par ajout de masselottes ;
- la forme de positionnement est un centrage ;
- la modification du centrage est réalisée par une retouche d'au moins trois zones de dimension réduites, l'ensemble de ces zones définissant un centrage ;
- le centrage reçoit un roulement lié à un carter ;
- l'équilibrage se fait suivant deux plans distincts, chacun de ces plans comportant des orifices de positionnement ;
- le mécanisme d'embrayage est associé à un deuxième mécanisme d'embrayage situé dans le même couvercle.

L'invention sera mieux comprise à la lecture de la description qui va suivre, donnée uniquement à titre d'exemple et faite en se référant aux dessins annexés dans lesquels :
- la figure 1 est une vue schématique en coupe d'un mécanisme d'embrayage fixé sur un volant moteur
- la figure 2 est une vue de face d'un couvercle de mécanisme.

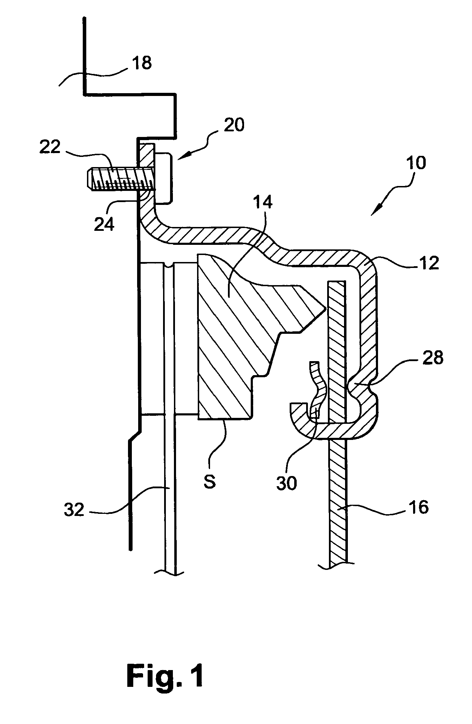

On a représenté sur la figure 1 un mécanisme pour embrayage de véhicule automobile désigné par la référence générale 10.

Le mécanisme 10, comportant un couvercle 12, un plateau de pression 14 et un diaphragme 16, est fixé sur un volant moteur 18 par des moyens de fixation 20.

Les moyens de fixation 20 comportent en général des vis 22, passant par des orifices de fixation 24 du couvercle 12, et permettant la fixation sur le volant moteur 18 du couvercle 12.

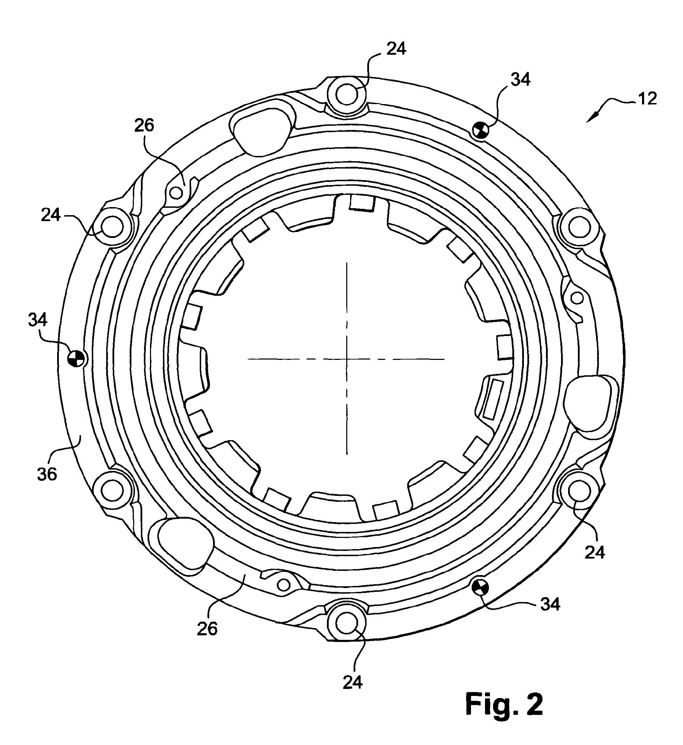

Le couvercle 12 est d'autre part relié au plateau de pression 14 par l'intermédiaire de languettes 26 (voir figure 2). Ces languettes solidarisent en rotation le couvercle 12 et le plateau de pression 14 tout en autorisant des déplacements axiaux du plateau de pression 14 par rapport au couvercle 12.

Le diaphragme 16 est articulé sur un bossage annulaire 28 du couvercle 12, contre lequel il est maintenu par une rondelle « Belleville » 30, en appui sur un bord interne du couvercle 12.

Lorsque le diaphragme 16 est au repos, il exerce une charge sur le plateau de pression 14. Le plateau de pression 14 exerce ainsi une charge sur une friction 32. La friction 32 est alors pincée entre le volant moteur 18 et le plateau de pression 14, ce qui a pour effet de solidariser en rotation cette friction 32 avec le volant moteur 18.

Lorsque le diaphragme 16 est sollicité, le plateau de pression se désolidarise de la friction 32, si bien qu'elle n'est plus entraînée en rotation par le volant moteur 18.

Dans tous les cas, le volant moteur 18 entraîne en rotation tout le mécanisme 10. Il est donc nécessaire, afin d'éviter des problèmes de vibrations, d'équilibrer le mécanisme 10.

A cet effet, le mécanisme 10 est très précisément positionné sur le volant moteur 18. Le positionnement est assuré par des moyens de positionnement comportant des orifices de positionnement 34 portés par le couvercle 12, représenté sur la figure 2. Ces orifices de positionnement 34 coopèrent avec des tétons de positionnement (non représentés) portés par le volant moteur 18.

En variante, ces orifices de positionnement 34 peuvent être formés par des encoches, notamment en « V », réalisées sur le contour extérieur du couvercle 12, ces encoches coopérant avec les tétons de positionnement du volant moteur 18.

Suivant une autre variante, les orifices de positionnement 34 peuvent former les orifices de fixation du couvercle 12. Dans ce cas, ce sont les vis de fixation 22 qui assurent le positionnement du couvercle 12 en coopérant avec les orifices 34.

Le procédé d'équilibrage selon l'invention comprend la réalisation dans le couvercle de ces orifices de positionnement 34.

Pour cela, on fait tout d'abord tourner le mécanisme 10 autour d'un axe de référence, en le fixant sur un dispositif d'équilibrage classique, par exemple par accrochage du plateau de pression 14 sur un mandrin de ce dispositif d'équilibrage coopérant avec la surface interne S du plateau de pression 14, visible sur la figure 1.

Une fois le mécanisme 10 fixé sur le mécanisme d'équilibrage, on détermine le balourd de ce mécanisme 10 autour de l'axe de référence.

Après détermination du balourd, on réalise dans le couvercle 12 les orifices de positionnement 34 de ce couvercle 12 sur le volant moteur 18, la position de ces orifices étant fonction du balourd.

Ces orifices de positionnement 34 sont de préférence réalisés par usinage, notamment par découpe laser.

On notera que l'usinage est plus précis que le poinçonnage.

Les orifices de positionnement 34 sont de forme oblongue, afin de définir un centre de rotation de manière non hyperstatique.

En variante, le couvercle 12 pourrait ne comporter qu'un seul orifice de positionnement 34 de forme oblongue et au moins un orifice de positionnement 34 de forme circulaire ou bien deux orifices de positionnement 34 de forme oblongue et un orifice de positionnement 34 de forme circulaire, ceci afin d'assurer une liaison isostatique avec le volant moteur 18, ou faiblement hyperstatique.

Selon les préférences de l'utilisateur, il est possible de ménager les orifices de fixation 24 après la détermination du balourd. Ainsi, ces orifices de fixations 24 peuvent être ménagés en fonction de la position des orifices de positionnement 34, ce qui permet de réduire le jeu entre les vis 22 des moyens de fixation 20 et l'orifice 24.

De la même manière que les orifices de positionnement 34, les orifices de fixation 24 peuvent être de forme oblongue, et/ou peuvent être réalisés par usinage, notamment par découpe laser ou encore par poinçonnage.

Les orifices de positionnement 34 ainsi réalisés définissent un axe de rotation passant par le point où se coupent leurs directions longitudinales médianes. Cet axe de rotation étant déterminé de façon à ce que le balourd soit réduit le plus possible, il passe par le centre de gravité du mécanisme ou à proximité de ce centre de gravité. L'axe de rotation est donc distant radialement du centre du contour interne ou externe du couvercle.

Cette distance radiale s'apprécie en fonction des tolérances habituellement admises lors des mesures du centre de gravité d'un mécanisme d'embrayage de ce type.

Un couvercle pour mécanisme d'embrayage suivant l'invention est donc muni d'orifices de positionnement 34 définissant un tel axe de rotation.

Habituellement, le fait que le centre de rotation soit situé près du centre de gravité suffit à assurer un balourd inférieur à une valeur prédéterminée, imposée le cas échéant par un cahier des charges. Cette valeur prédéterminée est généralement de l'ordre de 35, 25 ou 15 cm.g.

Cependant, si le balourd s'avère encore trop élevé, il est toujours possible d'effectuer une réduction du balourd résiduel en déplaçant le centre de gravité du mécanisme vers le centre de rotation par un procédé d'équilibrage classique.

En général, on souhaite que la distance entre l'axe de rotation et le centre du contour interne ou externe d'un élément annulaire quelconque du mécanisme ne dépasse pas une valeur maximale prédéterminée, de façon à éviter des problèmes d'encombrement avec d'autres éléments du mécanisme ou de l'embrayage

Le cas échéant, on limitera la distance entre l'axe de rotation et le centre du contour interne ou externe d'un élément annulaire quelconque du mécanisme à la valeur maximale prédéterminée et on réduira le balourd résiduel en déplaçant le centre de gravité du mécanisme vers l'axe de rotation par un procédé d'équilibrage classique.

Le plus souvent, on préférera procéder à un équilibrage par retrait de matière du couvercle, afin de ne pas avoir à ménager de moyens de fixations de masselottes sur le couvercle.

Le retrait de matière est effectué dans des zones 36 prévues à cet effet, et est réalisé par découpe laser.

Il est toutefois possible d'effectuer la réduction du balourd résiduel par ajout de masselottes sur les zones 36.

En variante, la forme de positionnement ménagée sur le couvercle coopérant avec des formes complémentaires portées par le support 18 peut être constituée par un centrage circulaire centré par rapport à l'axe de rotation. Ce centrage peut être continu sur son pourtour ou constitué seulement de plusieurs zones de dimensions réduites, au moins trois zones, pour assurer un positionnement précis. Par une modification de ce centrage, de la même manière, le centre de rotation est déplacé pour venir se confondre avec le centre de gravité.

En variante, ce centrage peut recevoir un roulement, dans le cas par exemple où il faudrait lier le couvercle à un carter constituant un support. Ce carter peut constituer un deuxième support venant en complément du volant moteur constituant un premier support. Cette configuration peut se rencontrer dans le cas d'un embrayage comportant un centrage du côté de la boîte de vitesse, réalisé par l'intermédiaire d'un roulement. L'embrayage repose alors sur deux supports, ces supports définissent deux plans perpendiculaires à l'axe de rotation est espacés entre eux. Il est possible de réaliser un positionnement de l'embrayage pour chacun de ces supports suivant le même procédé.

En variante, un couvercle comportant un double embrayage et un roulement de centrage du côté de la boîte de vitesses peut être équilibré suivant ce procédé par rapport aux deux supports, volant moteur et roulement, d'autant que la distance entre ces deux plans est plus importante.

## Revendications

1. Procédé d'équilibrage d'un mécanisme (10) d'embrayage comportant un couvercle (12) destiné à être positionné sur un support (18) au moyen de formes de positionnement (34) ménagés sur le couvercle (12) coopérant avec des formes complémentaires de positionnement portés par le support (18), ce procédé étant du type dans lequel :
- on fait tourner le mécanisme (10) autour d'un axe de référence,
- on détermine le balourd autour de cet axe de référence,
**caractérisé en ce que**, après détermination du balourd, on réalise, dans le couvercle (12), une modification des positions des formes de positionnement (34) de ce couvercle (12) sur le support (18), en fonction de la mesure du balourd.

2. Procédé d'équilibrage d'un mécanisme (10) d'embrayage selon la revendication 1, **caractérisé en ce que** pour faire tourner le mécanisme (10) autour de l'axe de référence, on fixe ce mécanisme (10) sur un dispositif d'équilibrage.

3. Procédé d'équilibrage d'un mécanisme (10) d'embrayage selon la revendication 2, **caractérisé en ce qu'**on fixe le mécanisme (10) sur le dispositif d'équilibrage par accrochage d'un plateau de pression (14) du mécanisme (10) sur un mandrin de ce dispositif.

4. Procédé d'équilibrage d'un mécanisme (10) d'embrayage selon l'une quelconque des revendications précédentes, **caractérisé en ce que** la forme complémentaire de positionnement est un téton.

5. Procédé d'équilibrage d'un mécanisme (10) d'embrayage selon l'une quelconque des revendications précédentes, **caractérisé en ce qu'**au moins un orifice de positionnement (34) est de forme oblongue.

6. Procédé d'équilibrage d'un mécanisme (10) d'embrayage selon l'une quelconque des revendications précédentes, **caractérisé en ce que** des orifices de fixation (24) du couvercle (12) sur le volant moteur (18) sont ménagés sur le couvercle (12) après détermination du balourd.

7. Procédé d'équilibrage d'un mécanisme (10) d'embrayage selon la revendication 6, **caractérisé en ce qu'**au moins un orifice de fixation (24) est de forme oblongue.

8. Procédé d'équilibrage d'un mécanisme (10) d'embrayage selon l'une quelconque des revendications précédentes, **caractérisé en ce qu'**au moins un orifice de positionnement (34) ou un orifice de fixation (24) est réalisé par usinage.

9. Procédé d'équilibrage d'un mécanisme (10) d'embrayage selon la revendication 8, **caractérisé en ce qu'**au moins un orifice de positionnement (34) ou un orifice de fixation (24) est réalisé par découpe laser.

10. Procédé d'équilibrage d'un mécanisme (10) d'embrayage selon l'une quelconque des revendications précédentes, **caractérisé en ce qu'**après réalisation des orifices (24, 34), on effectue une réduction du balourd résiduel.

11. Procédé d'équilibrage d'un mécanisme (10) d'embrayage selon la revendication 10, **caractérisé en ce que** la réduction du balourd résiduel se fait par enlèvement de matière du couvercle (12).

12. Procédé d'équilibrage d'un mécanisme (10) d'embrayage selon la revendication 11, **caractérisé en ce que** l'enlèvement de matière est réalisé par découpe laser.

13. Procédé d'équilibrage d'un mécanisme (10) d'embrayage selon la revendication 10, **caractérisé en ce que** la réduction du balourd résiduel se fait par ajout de masselottes.

14. Procédé d'équilibrage d'un mécanisme (10) d'embrayage selon l'une quelconque des revendications 1 à 3, **caractérisé en ce que** la forme de positionnement est un centrage.

15. Procédé d'équilibrage d'un mécanisme (10) d'embrayage selon la revendication 14, **caractérisé en ce que** la modification du centrage est réalisée par une retouche d'au moins trois zones de dimension réduites, l'ensemble de ces zones définissant un centrage.

16. Procédé d'équilibrage d'un mécanisme (10) d'embrayage selon l'une quelconque des revendications 14 et 15, **caractérisé en ce que** le centrage reçoit un roulement lié à un carter.

17. Procédé d'équilibrage d'un mécanisme (10) d'embrayage selon l'une quelconque des revendications 14 à 16, **caractérisé en ce que** l'équilibrage se fait suivant deux plans distincts, chacun de ces plans comportant des orifices de positionnement.

18. Procédé d'équilibrage d'un mécanisme (10) d'embrayage selon l'une quelconque des revendications 16 et 17, **caractérisé en ce que** le mécanisme d'embrayage est associé à un deuxième mécanisme d'embrayage situé dans le même couvercle.

## Claims

1. Method for balancing a clutch mechanism (10), comprising a cover (12) which is designed to be positioned on a support (18) by means of positioning forms (34) which are provided on the cover (12) and co-operate with complementary positioning forms which are supported by the support (18), this method being of the type in which:
- the mechanism (10) is rotated around a reference axis; and
- the unbalance around this reference axis is determined,
**characterised in that**, after determination of the unbalance, in the cover (12) the positions of the positioning forms (34) of this cover (12) are modified on the support (18), according to the extent of the unbalance.

2. Method for balancing a clutch mechanism (10) according to claim 1, **characterised in that**, in order to make the mechanism (10) rotate around the reference axis, this mechanism (10) is secured to a balancing device.

3. Method for balancing a clutch mechanism (10) according to claim 2, **characterised in that** the mechanism (10) is secured on the balancing device by coupling a pressure plate (14) of the mechanism (10) on a spindle of this device.

4. Method for balancing a clutch mechanism (10) according to any one of the preceding claims, **characterised in that** the complementary positioning form is a stud.

5. Method for balancing a clutch mechanism (10) according to any one of the preceding claims, **characterised in that** at least one positioning aperture (34) has an oblong form.

6. Method for balancing a clutch mechanism (10) according to any one of the preceding claims, **characterised in that** apertures (24) for securing the cover (12) on the engine flywheel (18) are provided in the cover (12) after the unbalance has been determined.

7. Method for balancing a clutch mechanism (10) according to claim 6, **characterised in that** at least one securing aperture (24) has an oblong form.

8. Method for balancing a clutch mechanism (10) according to any one of the preceding claims, **characterised in that** at least one positioning aperture (34) or one securing aperture (24) is produced by machining.

9. Method for balancing a clutch mechanism (10) according to claim 8, **characterised in that** at least one positioning aperture (34) or one securing aperture (24) is produced by laser cutting.

10. Method for balancing a clutch mechanism (10) according to any one of the preceding claims, **characterised in that**, after the apertures (24, 34) have been produced, the residual unbalance is reduced.

11. Method for balancing a clutch mechanism (10) according to claim 10, **characterised in that** the residual unbalance is reduced by removing material from the cover (12).

12. Method for balancing a clutch mechanism (10) according to claim 11, **characterised in that** the material is removed by laser cutting.

13. Method for balancing a clutch mechanism (10) according to claim 10, **characterised in that** the residual unbalance is reduced by the addition of inertia blocks.

14. Method for balancing a clutch mechanism (10) according to any one of claims 1 to 3, **characterised in that** the positioning form is a centring device.

15. Method for balancing a clutch mechanism (10) according to claim 14, **characterised in that** the centring device is modified by adjusting at least three areas with reduced dimensions, these areas together defining a centring device.

16. Method for balancing a clutch mechanism (10) according to either of claims 14 and 15, **characterised in that** the centring device receives a bearing which is connected to a housing.

17. Method for balancing a clutch mechanism (10) according to any one of claims 14 to 16, **characterised in that** the balancing is carried out according to two distinct planes, each of these planes comprising positioning apertures.

18. Method for balancing a clutch mechanism (10) according to either of claims 16 and 17, **characterised in that** the clutch mechanism is associated with a second clutch mechanism which is situated in the same cover.

## Patentansprüche

1. Verfahren zum Auswuchten eines Kupplungsmechanismus (10), welcher einen Deckel (12) umfasst, der dazu bestimmt ist, auf einem Träger (18) mittels Positionierungsformen (34), die am Deckel (12) vorgesehen sind und mit vom Träger (18) getragenen komplementären Positionierungsformen zusammenwirken, positioniert zu werden, wobei bei dem Verfahren:
- der Mechanismus (10) um eine Referenzachse gedreht wird,
- die Unwucht um diese Referenzachse bestimmt wird,
**dadurch gekennzeichnet, dass** nach der Bestimmung der Unwucht an dem Deckel (12) in Abhängigkeit vom Maß der Unwucht eine Modifizierung der Positionen der Positionierungsformen (34) des Deckels (12) auf dem Träger ausgeführt wird.

2. Verfahren zum Auswuchten eines Kupplungsmechanismus (10) nach Anspruch 1, **dadurch gekennzeichnet, dass** zur Drehung des Mechanismus (10) um die Referenzachse der Mechanismus (10) auf einer Auswuchtvorrichtung befestigt wird.

3. Verfahren zum Auswuchten eines Kupplungsmechanismus (10) nach Anspruch 2, **dadurch gekennzeichnet, dass** der Mechanismus (10) auf der Auswuchtvorrichtung durch Ankopplung einer Druckplatte (14) des Mechanismus (10) an einer Drehspindel der Vorrichtung befestigt wird.

4. Verfahren zum Auswuchten eines Kupplungsmechanismus (10) nach einem der vorherigen Ansprüche, **dadurch gekennzeichnet, dass** die komplementäre Positionierungsform ein Ansatz ist.

5. Verfahren zum Auswuchten eines Kupplungsmechanismus (10) nach einem der vorherigen Ansprüche, **dadurch gekennzeichnet, dass** mindestens eine Positionierungsöffnung (34) eine längliche Form hat.

6. Verfahren zum Auswuchten eines Kupplungsmechanismus (10) nach einem der vorherigen Ansprüche, **dadurch gekennzeichnet, dass** Öffnungen (24) zur Befestigung des Deckels (12) an dem Antriebsschwungrad (18) nach der Bestimmung der Unwucht in den Deckel (12) eingebracht werden.

7. Verfahren zum Auswuchten eines Kupplungsmechanismus (10) nach Anspruch 6, **dadurch gekennzeichnet, dass** zumindest eine Befestigungsöffnung (24) eine längliche Form hat.

8. Verfahren zum Auswuchten eines Kupplungsmechanismus (10) nach einem der vorherigen Ansprüche, **dadurch gekennzeichnet, dass** mindestens eine Positionierungsöffnung (34) oder Befestigungsöffnung (24) durch Einarbeitung ausgeführt wird.

9. Verfahren zum Auswuchten eines Kupplungsmechanismus (10) nach Anspruch 8, **dadurch gekennzeichnet, dass** zumindest eine Positionierungsöffnung (34) oder Befestigungsöffnung (24) durch Laserschneiden ausgeführt wird.

10. Verfahren zum Auswuchten eines Kupplungsmechanismus (10) nach einem der vorherigen Ansprüche, **dadurch gekennzeichnet, dass** nach Ausführung der Öffnungen (24, 34) eine Verringerung der Restunwucht vorgenommen wird.

11. Verfahren zum Auswuchten eines Kupplungsmechanismus (10) nach Anspruch 10, **dadurch gekennzeichnet, dass** die Verringerung der Restunwucht durch Entfernen von Material des Deckels (12) ausgeführt wird.

12. Verfahren zum Auswuchten eines Kupplungsmechanismus (10) nach Anspruch 10, **dadurch gekennzeichnet, dass** die Entfernung von Material durch Laserschneiden ausgeführt wird.

13. Verfahren zum Auswuchten eines Kupplungsmechanismus (10) nach Anspruch 10, **dadurch gekennzeichnet, dass** die Verringerung der Restunwucht durch Hinzufügen von Ausgleichsgewichten ausgeführt wird.

14. Verfahren zum Auswuchten eines Kupplungsmechanismus (10) nach einem der Ansprüche 1 bis 3, **dadurch gekennzeichnet, dass** die Positionierungsform eine Zentrierung ist.

15. Verfahren zum Auswuchten eines Kupplungsmechanismus (10) nach Anspruch 14, **dadurch gekennzeichnet, dass** die Modifizierung der Zentrierung durch eine Nachbearbeitung von mindestens drei Bereichen mit verringerten Abmessungen ausgeführt wird, wobei die Gesamtheit dieser Bereiche eine Zentrierung definiert.

16. Verfahren zum Auswuchten eines Kupplungsmechanismus (10) nach Anspruch 14 oder 15, **dadurch gekennzeichnet, dass** die Zentrierung ein Lager aufnimmt, das mit einem Gehäuse verbunden ist.

17. Verfahren zum Auswuchten eines Kupplungsmechanismus (10) nach einem der Ansprüche 14 bis 16, **dadurch gekennzeichnet, dass** die Auswuchtung in zwei verschiedenen Ebenen geschieht, wobei jede dieser Ebenen Positionierungsöffnungen umfasst.

18. Verfahren zum Auswuchten eines Kupplungsmechanismus (10) nach Anspruch 16 oder 17, **dadurch gekennzeichnet, dass** der Kupplungsmechanismus einem zweiten Kupplungsmechanismus zugeordnet ist, der in dem selben Deckel angeordnet ist.
